Europäisches Patentamt

**European Patent Office**

**Office européen des brevets**

(19)

(11) Publication number: **0 010 388**

**A1**

(12) # EUROPEAN PATENT APPLICATION

(21) Application number: **79302126.2**

(22) Date of filing: **05.10.79**

(51) Int. Cl.³: **G 02 B 7/26**

(30) Priority: **16.10.78 US 951534**
**26.12.78 US 972680**

(43) Date of publication of application:
**30.04.80 Bulletin 80/9**

(84) Designated Contracting States:
**DE FR GB**

(71) Applicant: **THAYER SCHOOL OF ENGINEERING DARTMOUTH COLLEGE**

**Hanover, New Hampshire 03755(US)**

(72) Inventor: **Hooven, Frederick J.**
**Elm Street**
**Norwich, Vermont 05055(US)**

(72) Inventor: **Lowd, Robert B.**
**143 Woodchester Drive**
**Chestnut Hill, Massachusetts(US)**

(74) Representative: **Pearce, Anthony Richmond et al,**
**Marks & Clerk Alpha Tower ATV Centre**
**Birmingham B1 1TT(GB)**

(54) Optical fiber coupling system.

(57) A connector for a pair of optical fibers includes a first lens means (11) adapted to be coupled to one of the optical fibers and a second lens means (12) adapted to be coupled to the other one of the optical fibers. The first and second lens means (11, 12) are axially aligned and spaced with respect to each other for directing light rays (40) paraxially therebetween to eliminate the light loss effect due to optical fiber (13,14) spacing and for focusing the light provided by one optical fiber onto the other optical fiber. The lens means also include lens members (17,18) that minimize spherical aberration to provide efficient light transfer between the pair of optical fibers (13,14).

FIG. I

EP 0 010 388 A1

Croydon Printing Company Ltd.

## OPTICAL FIBER COUPLING SYSTEM

### Background of the Invention

The present invention is directed to an improved connector assembly which provides increased light transfer efficiency in between optical fibers.

Fiber optic cables generally comprise a core of light transmissive material covered by an external protective sheath or cladding. The core may take the form of one or more glass fibers wherein each fiber is extremely small in diameter, on the order of 100 microns. The cladding is usually formed from a material having a lower index of refraction than the glass core fiber or fibers to assure propagation of the light introduced into the core down the cable by internal reflections. The indices of the cladding and core are customarily chosen so that the light will propagate along the cable with a maximum angle of internal reflection of about 7.8° from the center axis of the fiber.

In use, for conveying information, at one end of the fiber optic cable is a light source in the form of, for example, a laser or a light emitting diode. The light output of the light source is modulated by an electrical signal having a waveform representing the information to be conveyed. The modulated light enters the one end of the cable and is propagated down the cable within the core by internal reflection. At the other end of the cable is a light sensitive detector and associated electronic circuitry which detects the changes in intensity of the conveyed modulated light and transforms the same back into an electrical signal which is a reproduction of the modulating waveform.

In practical information communication applications, optical fibers must be connected to and disconnected from other optical fibers or signal processing equipment.
Optical fiber connector assemblies are therefore required
to provide such interconnections. However, in the coupling
of optical fibers by such connectors, the light transfer
efficiency may be adversely effected by a number of factors.
Among these factors the major contributors to degraded
light transfer efficiency are: (1) axial misalignment of
the fibers; (2) angular misalignment of the fibers; (3)
scattering of light by extraneous particles between the
fiber terminal ends; (4) light leakage or escape due to
fiber terminal and spacing or the lack of internal reflection in the interconnection region; and (5) internal reflection due to changes in the refraction indices between
the fibers and the medium in the space therebetween.

With respect to the losses resulting from axial and angular
misalignment of the fibers, various forms of connectors,
well known in the art, have been proposed which accurately
align the fibers both axially and angularly. With respect
to the other above-mentioned factors, the degree to which
these factors have been overcome have depended in large
measure on the type of optical fiber encountered.

Optical fibers are mainly of two different types, the
stepped index type and the graded index type. The stepped
index type of fiber has a uniform index of refraction
throughout for each radial displacement from the fiber
center axis. Hence, there is an abrupt change or step in
the index of refraction at the interface between the fiber
and the cladding.

The graded index fiber, on the other hand, has a gradually
varying index of refraction from its center axis to its
periphery, varying from a maximum at its center to a minimum approaching the index of refraction of the cladding at
its periphery. The graded index type fiber is becoming very popular because it exhibits much smaller variation of propagation velocity with variation in angle of propagation than the stepped index type.

With respect to the third factor of light scattering, because optical fibers are very small in diameter (on the order of 100 microns, as previously mentioned) even a very small extraneous particle can occlude the terminal end of a fiber. To compensate for this factor, extremely clean environments have been provided for mounting the optical fiber connectors to the fibers which, although suitable for interconnections in the laboratory, is not suitable for field interconnections.

With respect to the fourth factor, light leakage, various connectors have been proposed which closely space fiber terminal ends without touching to minimize this effect. Lastly, the fifth factor of internal reflections has been remedied in part through the use of materials in the interface area which have the same or nearly the same index of refraction as the fibers.

For overcoming one or more of the previously mentioned light loss factors, optical fiber connectors have been proposed which employ simple lens systems which, themselves, introduce a new light loss factor of spherical aberration. As well known, in a simple lens, when parallel light falls thereon, the light will be brought to a different point of focus for each circular element of the lens. The further out the light strikes from the center of the lens, the shorter the focal distance will be. As a result, the image of a point source is a circle of finite diameter. That circle gets larger as the ratio of lens diameter to focal length increases.

Unless all of the light provided by one fiber is focused upon the other fiber, a light loss and a lowered light transfer efficiency will result. Because fibers are extremely small in diameter, spherical aberration can have a great effect on light transfer efficiency unless corrected.

It has been found through practice that even though spherical aberration is very critical when stepped index fibers are used, it is even more critical with graded index fibers. The reason for this is that high angular rays will be propagated through a graded index fiber only if they are introduced within the inner 20% of the graded index fiber diameter so that the effective diameter of the fiber is only 20% of the core diameter for those high-angle rays. Hence, there is a need for a fiber optic cable connector which not only compensates for the five mentioned light loss factors, but in addition, minimizes spherical aberration to provide efficient light coupling between a pair of optical fibers.

The present invention provides an improved optical fiber connector assembly for providing efficiency light coupling between a pair of optical fibers.

The present invention also provides a connector assembly which includes a pair of complex lenses which not only increase the effective interconnection region interface area and directs the light provided by one fiber to the other fiber in parallel relation across the interconnection region interface area, but which also minimizes spherical aberration to focus substantially all of the light from one fiber onto the other fiber.

Summary of the Invention

The invention provides a connector assembly for optically coupling a pair of optical fibers together. The connector assembly includes a first lens means adapted to be coupled
to one of the optical fibers and a second lens means adapted to be coupled to the other one of the optical fibers. A
first and second lens means are axially aligned and spaced
with respect to each other for directing light rays paraxially (i.e. a collimated beam) therebetween to eliminate
the light loss effects due to fiber spacing and for focusing the light provided by one optical fiber onto the other
optical fiber. Each lens means also includes a lens member
that serves to minimize spherical aberration and provide
efficient light transfer between the pair of fibers.

## Brief Description of the Drawings

FIG. 1 is a schematic representation of a lens system which
may be employed within an optical fiber connector assembly
embodying the present invention; and

FIG. 2 is a cross-sectional view of an optical fiber connector embodying the present invention and which includes
the lens system illustrated in FIG. 1.

## Description of the Preferred Embodiment

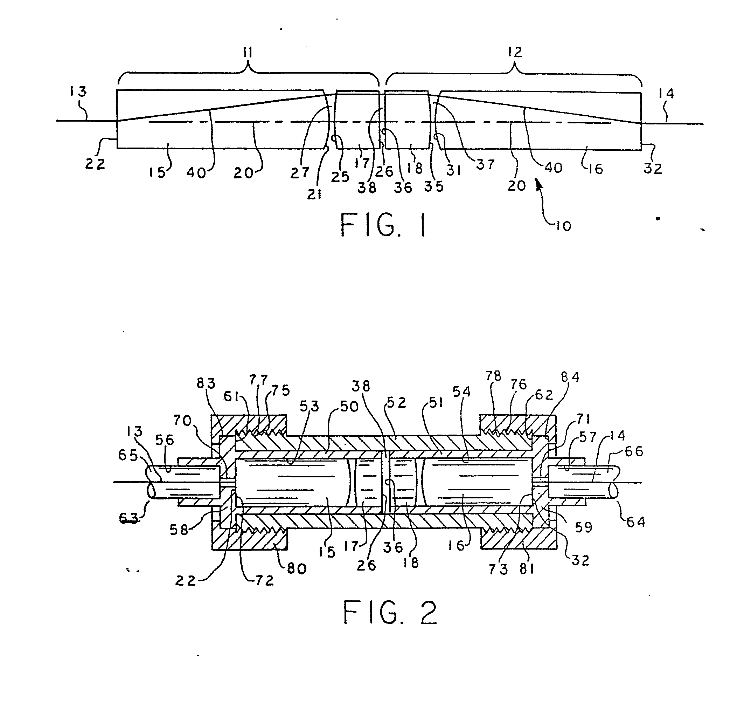

Referring now to FIG. 1, the lens system 10 shown which
embodies the present invention includes a first lens means
11 and a second lens means 12. The first lens means 11 and
the second lens means 12 are coupled to first and second
fiber optic cores 13 and 14, respectively, of a pair of
fiber optic cables to be optically coupled together by the
lens system 10.

Each of the lens means 11 and 12 includes a first lens
member 15 and 16, respectively, and a second lens member 17
and 18, respectively. Each of the lens members 15 through
18 has a center axis which is axially aligned along an axis
20. The fiber optic cores 13 and 14 are also axially

0010388

aligned along an axis 20. The fiber optic cores 13 and 14
are also axially aligned with the axis 20.

The first lens member 15 has a convex surface 21 at one
end and a substantially planar surface 22 at its other end.
The second lens member 17 also has a convex surface 25 at
one end and a substantially planar surface 26 at its other
end. The convex surfaces 21 and 25 are spaced apart in
facing relation to form a first complex, double-concave
lens 27 in the space therebetween. The double-concave lens
27 thus formed constitutes a positive lens and is obtained
due to the fact that the material of the lens 27 is air and
has a lesser index of refraction than the glass material
from which the lens elements 15 and 17 are formed.

Similarly, the first lens member 16 has a convex surface 31
at one end and a substantially planar surface 32 at its
other end. The second lens member 18 also has a convex
surface 35 at one end, and a substantially planar surface
36 at its other end. The convex surfaces 31 and 35 are also spaced apart in facing relation to form a second complex,
double-concave lens 37 in the space therebetween. Again,
the second double-concave lens 37 is a positive lens.

The substantially planar surfaces 26 and 36 of the second
lens members 17 and 18 respectively are spaced apart in
facing relation forming an interface area 38. As will be
more fully explained subsequently, the lens system 10
directs the light from one core 13 to the other core 14
across the interface area 38 paraxially or in parallel relation to the axis 20. This renders the light coupling
efficiency substantially independent of the spacing between
the surfaces 26 and 36 and also the spacing between the
terminal ends of the cores 13 and 14 which forms the interconnection region. As a result, the spacing between the

0010388

surfaces 26 and 36 is not critical.

To minimize spherical aberration, the radius of curvature
of convex spherical surfaces 21 and 31 are different from
the radius of curvature of convex spherical surfaces 25
and 35. More specifically in a typical design having a
glass of index 1.83 at 820 mm., the effective radius of
surfaces 21 and 31 may be equal to 8.4 millimeters while
the effective radius of surfaces 25 and 35 may be 25.04
millimeters. This assures that all the light from one
core will be focused onto the other core.

In operation, when the light is provided by a core, core
13, for example, it will exit the core in a cone-shaped
pattern having a maximum angle of divergence from the axis
20 of approximately 7.8°. The light rays, such as light
ray 40, will first pass through the first double-concave
lens 27 which bends the light rays so that they are paralel
to the axis 20. The rays then pass through the second lens
member 17 and 18 and to the second double-concave lens 37.
The lens 37 bends the light rays and directs them to a
single focal point defined by the intersection of the core
14 and the planar surface 32. Because the lenses 27 and
37 are structured to minimize spherical aberration, all of
the light from the core 13 is directed in parallel (i.e. in
a collimated beam) through the interface region 38 and focused onto the core 14. Hence, the light loss in the interface region is minimized and is also uneffected by the
spacing of the planar surfaces 26 and 36. As a result, the
lens system of FIG. 1 assures minimized light loss between
the cores 13 and 14 due to spherical aberration and cable
terminal end spacing and thus provides efficient light
coupling between the cores. Of course, the lens system of
FIG. 1 functions in an identical manner for light emitted
from core 14 to be transferred to core 13.

0010388

To minimize internal reflections within the lens system of FIG. 1, the convex surfaces 21, 25, 31, and 35, and the planar surfaces 26 and 36 may be coated with suitable well-known, non-reflecting coatings. This makes the use of index of refraction matching materials unnecessary.

The lens system of FIG. 1 not only provides the foregoing features and advantages, but as well, also minimizes the stray reflections and occlusions due to extraneous particles. As can be seen in FIG. 1, the lens system allows the interface area to be expanded from the relatively small cross-sectional area of the core terminal ends to the comparatively large cross-sectional area of the region 38. As a result, an extraneous particle which would otherwise fully occlude a core terminal end will cause a comparatively slight light loss when acting upon the transferred light at one of the surfaces 21, 25, 26, 36, 35 or 31. Furthermore, this expansion of the interface area makes the overal performance of the fiber optic interconnection more tolerant to axial misalignment.

While the lens system of FIG. 1 embodying the present invention has been shown and described as including two complex lenses, it will of course be appreciated by those skilled in the art that any even numbered number of lenses may be utilized without departing from the present invention. However, the use of two lenses is considered to be preferred because the gains obtained from using additional lenses diminishes greatly and adds substantial complexity to the overall connector assembly in which they are employed.

Referring now to FIG. 2, the fiber optic cable connector there illustrated includes a first generally tubular member 50, a second generally tubular member 51, a third generally

0010388

tubular member 52, and the lens system of FIG. 1 comprising the first lens members 15 and 16 and the second lens members 17 and 18. The third tubular member 52 is dimensioned for receiving the first and second tubular members 50 and 51 for axially aligning the first and second tubular members 50 and 51. The first and second tubular members 50 and 51 each include a first tubular extension 53 and 54 respectively, a second tubular extension 56 and 57 respectively, and a partition wall or body 58 and 59 respectively. The tubular extensions 53 and 54 are dimensioned for receiving the lens elements 15 through 18 as shown so that the lens elements are axially aligned and spaced in a manner as described previously with reference to FIG. 1.

The partition walls 58 and 59 extend beyond the periphery of the tubular extensions 53 and 54 to define facing annular shoulder portions 61 and 62 which abut the ends of the third tubular member 52. The lengths of the tubular extensions 53 and 54 are such that when the annular shoulder portions 61 and 62 abut the ends of the third tubular member 52, the planar surfaces 26 and 36 of lens member 17 and 18 respectively will be spaced apart to define the interface area 38.

The fiber optic cables 63 and 64 to be coupled by the connector assembly of FIG. 2 include the fiber optic cores 13 and 14 respectively and protective sheaths or claddings 65 and 66 respectively. The fiber optic cores 13 and 14 may comprise, for example, a single optical fiber.

The fiber cores 13 and 14 extend through an aperture or bore 70 and 71 in the partition wall 58 and 59 respectively and abut the planar end surfaces 22 and 32 of the first lens members 15 and 16 respectively. The bores 70 and 71 are dimensioned for tightly receiving the cores 13 and 14 and are aligned along the center axis of the connector so that the cores 13 and 14 will be aligned with the center axis of the connector and the lens system therein. Preferably, the partition walls 58 and 59 include forwardly facing planar surfaces 72 and 73 for abutting the planar surfaces 22 and 32 of the first lens members 15 and 16.

The second tubular extensions 56 and 57 are provided for supporting the fiber optic cables 63 and 64 substantially in line to the center axis of the connector and perpendicularly to the partition wall 58 and 59. To that end, the inner dimension of the tubular extensions 56 and 57 are arranged to tightly receive the protective cladding 65 and 66 of the fiber optic cables.

The third tubular member includes an external threads 75 and 76 at each end which coact with mating internal threads 77 and 78 carried by a pair of nut members 80 and 81. Each of the nut members includes an annular end surface 83 and 84 which abut the partition walls 58 and 59 when the threads are fully engaged to hold the connector assembly together.

- 11 - <span>0010388</span>

<u>C L A I M S</u> :-

1. A connector assembly for optically coupling a pair of optical fibers (13, 14) together comprising: first lens means (11) adapted to be coupled to one of said optical fibers; second lens means (12) adapted to be coupled to the other one of said optical fibers; said first and second lens means (11, 12) being axially aligned and characterized in each including convex lens surfaces (21, 31) spaced with respect to each other for directing light rays (40) paraxially therebetween to eliminate the light loss effects due to fiber spacing and for focusing the light provided by one optical fiber (13) onto the other optical fiber (14).

2. A connector assembly as defined in claim 1 wherein said first and second lens means each comprise a complex lens having at least two light ray refracting surfaces (21, 25; 31, 35).

3. A connector assembly as defined in claim 1 wherein each said lens means (11, 12) comprises a first lens member (15, 16) having a first convex lens surface (21, 31) and a second lens member (17, 18) having a second convex lens surface (25, 35), said first and second convex surfaces being axially aligned and spaced apart with respect to each other in facing relation forming a double-concave air lens (27, 37) in the air space between said first and second convex surfaces of each lens means.

4. A connector assembly as defined in claim 3 wherein the effective radius of said second convex surface (25, 35) is greater than the effective radius of said first convex surface (21, 31).

0010388

5.  A connector assembly as defined in claim 3 wherein each said second lens member (17, 18) comprises a substantially planar end surface (26, 36) at its end opposite said second convex surface.

6.  A connector assembly as defined in claim 5 wherein said first and second lens means are arranged with said substantially planar end surfaces (26, 36) of said second lens members (17, 18) being spaced apart and axially aligned in facing relation.

7.  A connector assembly as defined in any of claims 3 - 6 wherein each said first member (15, 16) includes a substantially planar end surface (22, 32) at its end opposite said first convex surface (21, 31), each said planar end surface (22, 32) being optically coupled to a respective one of said optical fibers (13, 14).

8.  A connector assembly according to any of claims 3 - 7 including a first tubular member (50) and a second tubular member (51) coaxial therewith, one of said double-concave air lenses being respectively in each tubular member.

9.  A connector assembly according to claim 8 including a third tubular member (52) that receives and axially aligns said first and second tubular members (50, 51).

10.  A connector assembly according to claim 9 including means (80, 81) for retaining said first and second tubular members (50, 51) in place within said third tubular member (52).

FIG. 1

FIG. 2

## EUROPEAN SEARCH REPORT

European Patent Office

EP 79 302 126.2

| | DOCUMENTS CONSIDERED TO BE RELEVANT | | CLASSIFICATION OF THE APPLICATION (Int. Cl.3) |
|---|---|---|---|
| Category | Citation of document with indication, where appropriate, of relevant passages | Relevant to claim | |
| | GB - A - 1 492 248 (SIEMENS AG) <br> * fig.2 * | 1-3 | G 02 B   7/26 |
| | GB - A - 1 429 843 (PLESSEY COMP.LTD.) <br> * claim 4; fig. 2 and 3 * | 1,2 | |
| | DE - A1 - 2 711 171 (SMITHS INDUSTRIES LTD.) <br> * fig. 1 and 8 * | 1,8 | |
| A | DE - A1 - 2 703 887 (DEUTSCHE ITT INDUSTRIES GMBH) <br> * claim 1; fig. 3 * | 3,9 | TECHNICAL FIELDS SEARCHED (Int.Cl.3) <br><br> G 02 B   7/26 |
| A | US - A - 4 102 559 (J.J. HUNZINGER) <br> * abstract * | | |
| A | DE - A1 - 2 606 255 (THE POST OFFICE, LONDON) <br> * complete document * | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search <br> Berlin | Date of completion of the search <br> 24-01-1980 | Examiner <br> FUCHS | |